# EUROPEAN PATENT SPECIFICATION

(11) **EP 3 087 450 B1**
(45) Date of publication and mention of the grant of the patent: **01.01.2020**
(21) Application number: 14875838.6
(22) Date of filing: 26.11.2014
(51) Int. Cl.: G06F 1/3231

(54) **METHOD AND APPARATUS FOR POWER MANAGEMENT IN AN ELECTRONIC DEVICE BY SENSING THE PRESENCE AND INTENT OF AN OBJECT**
VERFAHREN UND VORRICHTUNG ZUR LEISTUNGSSTEUERUNG IN EINER ELEKTRONISCHEN VORRICHTUNG DURCH ERFASSUNG DER ANWESENHEIT UND ABSICHT EINES OBJEKTS
PROCÉDÉ ET APPAREIL DE GESTION DE L'ALIMENTATION DANS UN DISPOSITIF ÉLECTRONIQUE PAR DÉTECTION DE LA PRÉSENCE ET DE L'INTENTION D'UN OBJET

(30) Priority: 27.12.2013 US 201314142145
(43) Date of publication of application: 02.11.2016
(73) Proprietor: Intel Corporation, Santa Clara, CA 95054 (US)
(72) Inventor: S, Arvind, Bangalore 560102 (IN); SHARMA, Manish, Bangalore 560075 (IN); GUPTA, Goutam, Bangalore 560103 (IN); KRISHNASWAMY, Prasanna, Bangalore 560078 (IN); JOTHISWARAN, Gangatharan, Bangalore 560017 (IN); SUBRAMANIAM, Gokul V., Bangalore 560037 (IN); NARAYANAN, Anantha, Bangalore 560086 (IN); GOPALAKRISHNAN, Manoj, Bangalore 560037 (IN); RAMAPRAKASH, Nishanth, Bangalore 560070 (IN)
(74) Representative: Goddar, Heinz J.
(86) International application number: PCT/US2014/067591
(87) International publication number: WO 2015/099946

(56) References cited:
- EP-A1- 2 490 101
- EP-A2- 0 566 852
- US-A1- 2002 080 132
- US-A1- 2006 262 829
- US-A1- 2010 105 423
- US-A1- 2012 166 015
- US-A1- 2013 151 192
- US-A1- 2013 214 166
- US-A1- 2013 325 256
- US-B1- 7 587 262
- US-B2- 7 360 945

## Description

### Technical Field

The present techniques relate generally to power management in electronic devices. More particularly, the present techniques relate generally to power management in electronic devices by sensing user presence and intent.

### Background Art

Computers, cellular telephones, tablets, display panels, televisions, and many other types of electronic devices may incorporate several sensors, such as passive infrared, audio, and camera sensors, to sense an action of a user and, in response thereto, may cause the device to take one or more predetermined actions such as resuming operation or scrolling displayed content. While these types of sensors may be applied in an effort to reduce the amount of power the device consumes, the sensors may be continuously powered on even when the device is in an inactive mode of operation. Thus, although the sensors are intended to reduce power consumption, they may actually increase the power consumed by the device under certain usage or operating conditions. Further, the types of sensors typically utilized are relatively costly to procure. Moreover, the types of sensors typically utilized have relatively limited capability in that they may detect only the occurrence of an event rather than detecting specific characteristics of that event. Thus, such sensors may provide relatively limited information to a device, which, in turn, may cause the device to operate in an undesirable or erroneous manner.

US 2013/214166 A1 discloses an apparatus and methods for a passive range finding proximity detector include a sensor element configured to detect infrared radiation emitted by objects within a detection area. The sensor is configured to detect the temperature, relative size, relative distance, speed or direction of movement of an object from the sensor. The sensor is configured to set parameters for a controlled object based upon the detected size, temperature and/or proximity, speed or direction of an object in relation to one or more size thresholds, temperature thresholds, and/or proximity, speed or direction thresholds.

EP 2 490 101 A1 discloses a system and method for activating an electronic device. The activation circuit comprises: a first sensor to monitor for a first condition relating to an environment as affected by a user of the device; a second sensor to monitor for the first condition relating to an environment isolated from effects of the user; and an activation circuit to evaluate signals from the first and second sensors to determine whether to change an activation state of a component on the device. This may involve activating or deactivating the component.

US 2002/080132 A1 discloses an apparatus for detecting presence of a user. The apparatus includes at least one thermal sensor to sense temperature around a defined area of a computer system and a user presence detection subsystem coupled to the thermal sensor. The user presence detection subsystem determines presence of a user by analyzing signals output by the thermal sensor during a sampling period.

US 2010/105423 A1 discloses a method for controlling a feature of a telecommunications device which includes determining a proximity of a user to the telecommunications device by detecting the body heat of the user. In response to determining proximity of the user, a feature of the telecommunications device is toggled between an activated state and a deactivated state.

EP 0 566 852 A2 discloses that in order to detect a position where a human body may exist with the aid of a single infrared detector, a human body detecting system comprises a condenser for the provision of a plurality of effective detection regions each having different areas and provided within partial detection regions. When the human body moves across one of the effective detection regions, the infrared detector detects the infrared rays radiated from the human body to produce signals. Accordingly, the thus output signals present different frequencies depending on the effective detection regions, whereby the differences in the fluctuation times of the output signals and in the frequencies are discriminated by a decision apparatus to consequently detect which partial detection region includes the human body.

US 2013/325256 A1 discloses a non-contact gesture recognition system for recognizing gestures made by an occupant of a vehicle using a first multiple-zone temperature sensor equipped with an array of temperature sensors. The sensor outputs an array signal indicative of a zone temperature for each of a plurality of zones within the vehicle. The array may be oriented such that a sample direction on the array arising from the gesture is characterized as diagonal. The sensor may include a multi-focal length Fresnel lens panel formed of a plurality of Fresnel lens elements having various focal lengths.

### Brief Description of the Drawings

Fig. 1 is a block diagram of an electronic device including one embodiment of an apparatus for sensing user presence and intent of the present invention;
Fig. 2 is a block diagram of one embodiment of a sensor assembly or hub for sensing user presence and intent of the present invention;
Fig. 3 illustrates an exemplary field of view of one of the presence sensors of Figs. 1 and 2;
Fig. 4 is a process flow diagram illustrating one embodiment of a method for sensing user presence and intent of the present invention;
Fig. 5 is an exemplary temperature vs. time characteristic indicative of a user approaching the presence sensors of Figs. 1 and 2;
Fig. 6 is an exemplary temperature vs. time characteristic indicative of a user crossing or passing through a field of view of the presence sensors of Figs. 1 and 2;
Fig. 7 is a perspective view of an electronic device that includes one embodiment of a method and apparatus for sensing user presence and intent of the present invention; and
Fig. 8 is a perspective view of another electronic device that includes one embodiment of a method and apparatus for sensing user presence and intent of the present invention.

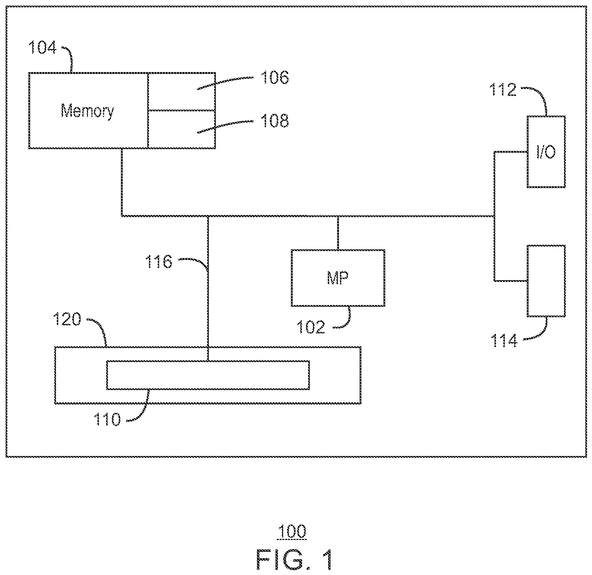

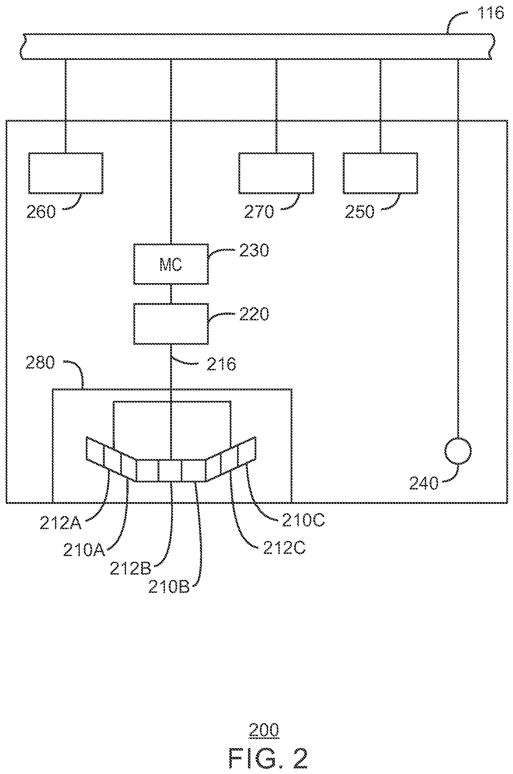

The same numbers are used throughout the disclosure and the figures to reference like components and features. Numbers in the 100 series refer to features originally found in Fig. 1; numbers in the 200 series refer to features originally found in Fig. 2; and so on.

### Description of the Embodiments

The invention is defined in independent claims 1, 7 and 10.

Preferred embodiments are defined in the dependent claims.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

Some embodiments may be implemented in one or a combination of hardware, firmware, and software. Some embodiments may also be implemented as instructions stored on a machine-readable medium, which may be read and executed by a computing platform to perform the operations described herein. A machine -readable medium may include any mechanism for storing or transmitting information in a form readable by a machine, e.g., a computer. For example, a machine-readable medium may include read only memory (ROM); random access memory (RAM); magnetic disk storage media; optical storage media; flash memory devices; or electrical, optical, acoustical or other form of propagated signals, e.g., carrier waves, infrared signals, digital signals, or the interfaces that transmit and/or receive signals, among others.

An embodiment is an implementation or example. Reference in the specification to "an embodiment," "one embodiment," "some embodiments," "various embodiments," or "other embodiments" means that a particular feature, structure, or characteristic described in connection with the embodiments is included in at least some embodiments, but not necessarily all embodiments, of the present techniques. The various appearances of "an embodiment," "one embodiment," or "some embodiments" are not necessarily all referring to the same embodiments. Elements or aspects from an embodiment can be combined with elements or aspects of another embodiment.

Not all components, features, structures, characteristics, etc. described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

It is to be noted that, although some embodiments have been described in reference to particular implementations, other implementations are possible according to some embodiments. Additionally, the arrangement and/or order of circuit elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

Fig. 1 is a block diagram of an electronic device 100 having one embodiment of a user presence and intent sensing method and apparatus of the present invention. Electronic device 100 may be a computer, laptop, tablet, cellular or mobile phone, portable media or music player, television or display panel, or virtually any other type of electronic device. Electronic device 100 may include a central processing unit (CPU) 102, memory 104, an operating system 106, instructions 108, one or more sensors 110, input/output device 112 and a user interface device 114, all of which may be communicatively coupled to and exchange signals/information via device bus 116.

CPU 102 may, in embodiments, be a conventional CPU or, in other embodiments, may be a CPU specifically configured for operation at low or reduced power consumption rates. CPU 102 is capable of reading and executing computer-readable instructions, which, in embodiments, may include instructions stored in memory 104, including operating system instructions 106. CPU 102 may further be capable of reading and executing other computer-readable instructions such as instructions 108 that may also be stored in memory 104. Memory 104, in addition to storing operating system instructions 106 and instructions 108, may also store data such as application-related data. Memory 104 may include memories of different types, and thus may be configured as one or more, or various combinations of one or more, of nonvolatile read only, read only, random access, hard disk drive, or other types or combinations of types of, memories.

Operating system 106 is a set of computer-readable instructions that, when executed by CPU 102, enables the basic operation, and manages the hardware, software, memory and processes, of electronic device 100. Operating system 106 may be configured as an Android, Windows, Linux, iOS, proprietary, or virtually any type of operating system. Instructions 108 are a set of computer-readable instructions that, when executed by CPU 102, may cause electronic device 100 to perform various functions or take various actions autonomously and in response to user input or instructions. Instructions 108 may also, when executed by CPU 102, cause the electronic device to perform one or more embodiments of the user presence and intent sensing method of the present invention, which will be more particularly described hereinafter.

Sensor 110 includes one or more ambient temperature sensors, in the form of infrared thermopile sensors. As will be described in more detail with reference to Fig. 2, sensor 110 may, in embodiments, be configured as a sensor assembly or hub that includes one or more thermopile sensors and associated circuitry, and may further include various other types of sensors, such as, for example, one or more ambient light sensors, gyroscopes, passive infrared sensors, accelerometers, capacitive sensors, and other types of sensors. Sensor 110 may be enclosed in a housing 120. Housing 120 may be constructed of material that permits the frequency range of infrared radiation of an object to be detected to pass through the housing and onto sensor 110 while being substantially impervious to infrared radiation outside the frequency range of infrared radiation that is desired to be detected. In embodiments, housing 120 may be constructed of material that is impervious to all infrared radiation other than infrared radiation having a frequency corresponding to the infrared radiation emitted by a human being, or from approximately 7 to approximately 15 micrometers. Housing 120 may, in such an embodiment, be constructed of, for example, a high-density polyethylene.

Input/output device 112 may be configured as a conventional input/output (I/O) port, such as a USB port, or may be configured as a wireless I/O port, such as, for example, a WiFi or Bluetooth port, that enables electronic device 100 to exchange information wirelessly with another device. User interface device 114 enables a user to input data to and receive information from the electronic device 100, and may be configured as, for example, a display, touch screen display, keyboard and display combination, voice control and recognition system, speaker, or any combination of one or more of the foregoing or similar. Device bus 116 may be a conventional bus that carries electronic signals and data between and among the components of device 100.

As will be more particularly described hereinafter, electronic device 100, and more particularly instructions 108 executed by CPU 102 in conjunction with sensor 110, generally operates to sense the desired or target frequency range of infrared radiation and to determine various characteristics of the sensed infrared radiation, including, in embodiments, whether the source of that radiation is approaching toward or moving away from the device 100 and the approximate distance of the sensed radiation from the device 100, to thereby determine or infer an intent of a user or other source of the infrared radiation. In response thereto, the device 100 may, in embodiments, take certain actions such as activating other sensors to identify or receive input from the user or other source of the infrared radiation, activating or modifying the operating characteristics of other elements of the device 100, displaying a message or otherwise communicating information that may be of a general nature and intended for the detected user or other source that may be of a specific nature intended for and adapted to a detected and identified user or other source, or not waking the device if the inferred intent of the user or other source is not consistent with an intent to activate or otherwise interact with the device thereby conserving power.

Fig. 2 is a block diagram of one embodiment of a sensor assembly or hub 200 of the present invention. In the embodiment of Fig. 2, sensor hub 200 includes three sensors 210A, 210B, 210C, which are thermopile sensors connected electrically in series. It should be noted that, in embodiments, there may as few as one sensor 210 or as many sensors 210 connected together in series as may be suitable for a particular application, and as may be determined, at least in part, by the particular operating characteristics, including, for example, the sensitivity, of the sensors. The sensors 210A-C may each be associated with corresponding lenses 212A-C, which in embodiments may be large aperture, short focal length lenses such as a Fresnel or similar lens. Sensors 210A-C are oriented relative to each other, such as, for example, set at angles relative to each other, to ensure their respective fields of view overlap sufficiently to provide a collective field of view that is continuous and desirably wide for a given application. When one or more of sensors 210A-C detect or measure a change in the average ambient temperature within their field of view, that change in temperature is converted to or indicated by an electrical signal issued by the sensor. The electrical signals issued by the sensors 210A-C are communicatively coupled via signal line 216 to amplifier and processing circuitry 220. Amplifier and processing circuitry 220, in embodiments, may include amplification, analog-to-digital conversion and other necessary or desired processing of the electrical signals issued by the sensors 210A-C. Once the sensor signals are processed by amplifier and processing circuitry 220, the processed signals are passed via signal line 216 to decoder device 230.

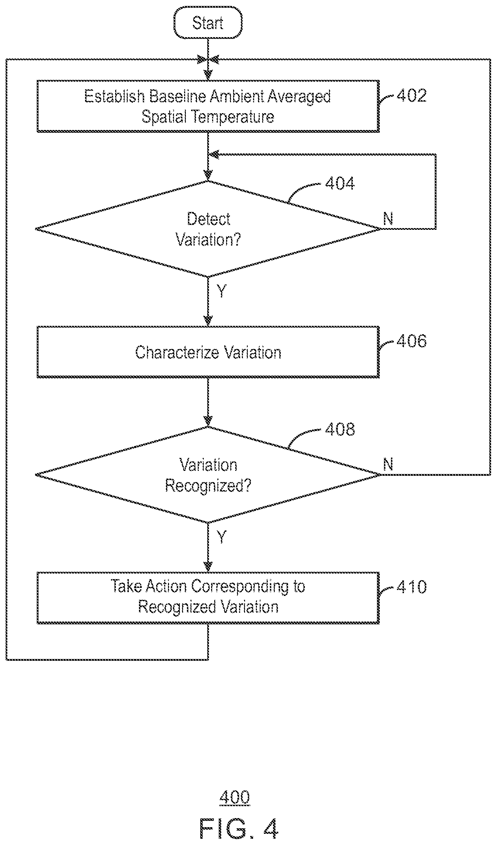

Decoder device 230 may, in embodiments, be a microcontroller device configured to decode the changes in sensed average ambient temperature, as well as any localized variations thereof, within the field of view of sensors 210A-210C, as indicated by the processed signals provided thereto by amplifier and processing circuitry 220. In embodiments, the function of decoding the changes and any variations in the sensed average ambient temperature within the field of view of sensors 210A-210C may be performed by instructions 108 executed by CPU 102 of electronic device 100. The ambient temperature information decoded by decoder device 230 may then be placed on device signal bus 116 for further processing by electronic device 100, which further processing is more particularly described with reference to Fig. 4.

In embodiments, sensor hub 200 may also include various other types of sensors that may be utilized by electronic device 100. Sensor hub 200 may include an audio sensor or microphone 240 to detect sound in the environment of device 100, gyroscope 250 to sense an orientation of device 100, an ambient light sensor 260 to detect a level of ambient light surrounding the device 100, and a camera sensor 270.

Sensors 210A-C may be enclosed in a housing 280. Housing 280 may be constructed of a material that is impervious to all infrared radiation other than the range of infrared radiation that is desired to be detected. More particularly, housing 280 may be constructed of material that is substantially impervious to all infrared radiation other than the infrared radiation that is desired to be detected. In embodiments, housing 280 may be constructed of a material that is substantially impervious to all infrared radiation other than the range emitted by a human, such as from approximately 7 to approximately 15 micrometers. In such an embodiment, housing 280 may be constructed of, for example, a high-density polyethylene.

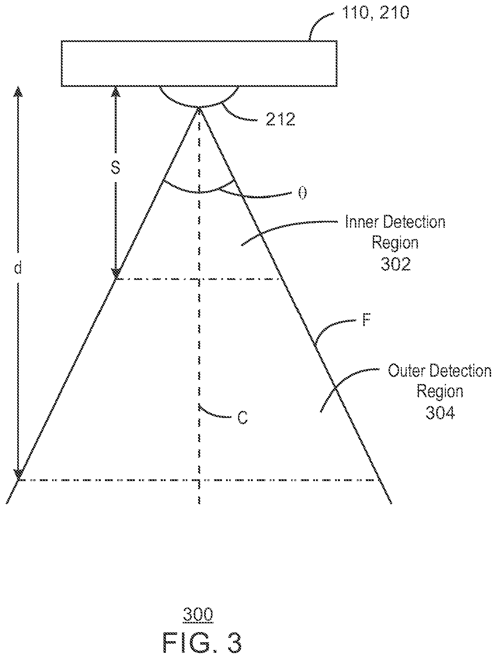

Figure 3 illustrates a field of view of an exemplary sensor 110, 210, having lens 212, such as a Fresnel lens. The sensor field of view is represented by the cone F extending from lens 212 outward at a cone apex angle θ and having a centerline C. The exemplary sensor 110, 210 may sense a change in ambient temperature due to by sensing infrared radiation out to a maximum distance *d* from the sensor. The sensor may saturate or otherwise be unable to sense a change in ambient temperature due to infrared radiation when a source of that radiation is within the saturation distance *S* of the sensor. The region within cone F disposed between the sensor 110, 210 and the saturation distance *S* may be referred to hereinafter as the inner detection region, whereas the region within cone *F* between the saturation distance S and the maximum distance d may be referred to hereinafter as the outer detection region.

Figure 4 is a process flow diagram of one embodiment of a method for presence sensing in an electronic device of the present invention. Method 400 includes establishing baseline 402, detecting variation 404, characterizing variation 406, variation recognized 408, and take action corresponding to variation 410. Method 400 may be performed by an electronic device, such as electronic device 100, and may be embodied at least in part by computer executable instructions, such as instructions 108 of electronic device 100.

At block 402, a baseline average ambient temperature characteristic is established. The baseline average spatial ambient temperature characteristic is established for and within the field of view of one or more sensors associated with the electronic device. In embodiments, an average spatial ambient temperature of the field of view of the one or more sensors may be determined based on the infrared radiation sensed by the one or more sensors 110, 210A-C. At block 404, method 400 monitors the fields of view of the one or more sensors for any variation from the baseline average spatial ambient temperature characteristic. More particularly, the one or more sensors take periodic temperature measurements to determine a current average spatial ambient temperature within their corresponding fields of view. That current average spatial ambient temperature is compared against the baseline established at block 402 to determine whether the current average spatial ambient temperature varies from the baseline. If no variation, or no variation in excess of a predetermined minimum threshold, is detected, method 400 continues to monitor via blocks 402 and 404 the fields of view of the one or more sensors for a variation from the baseline average spatial ambient temperature. Conversely, if a variation, or a variation in excess of a predetermined threshold, is detected, method 400 proceeds to block 406.

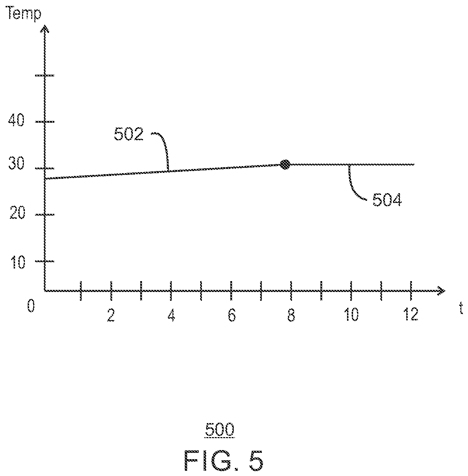

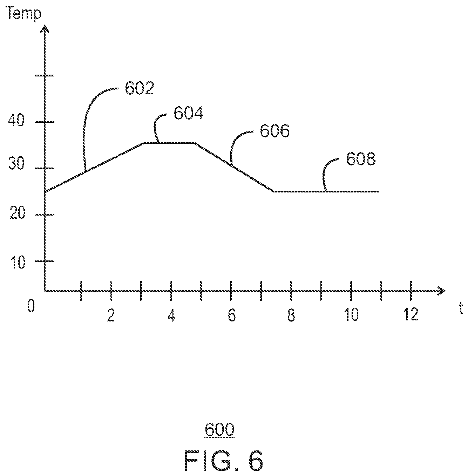

At block 406, the detected variation is characterized. More particularly, the detected variation is compared with the known characteristic temperature variation indicative of the presence within the field of view of the one or more sensors of an object of interest, i.e., an object that emits infrared radiation within a known range and, thus, having a known characteristic temperature, such as a characteristic temperature of a human body, an animal, a mechanical object such as a robot, or any other object having a known characteristic temperature. If the variation is indicative of the object of interest being present within the field of view of the one or more sensors, the variation may be further characterized by taking additional or more frequent periodic measurements of the average spatial ambient temperature within the field of view of the one or more sensors to determine certain characteristics of the variation, including, in embodiments, whether the variation is stationary or in motion relative to the one or more sensors. Characterizing the variation includes periodically reading the ambient temperature measured by the one or more sensors and recording over time the variation in the measured ambient temperature relative to the baseline characteristic. Exemplary characteristic variations are illustrated with reference to Figs. 5 and 6, and are discussed in more detail below.

At block 408, a determination is made as to whether the detected variation is recognized as a known or anticipated variation. The characteristics of the detected variation are compared with known or anticipated variations. The characteristics of certain known or anticipated variations are stored in the form of data as a look up table in the memory of the electronic device, such as memory 104 of electronic device 100, and the characteristics of the detected variation are compared against the characteristics of the known or anticipated variations to determine whether there is sufficient similarity between the two. In other embodiments, a microcontroller, such as microcontroller 230, may be programmed or otherwise configured to compare detected variations with certain known or anticipated variations and to thereby determine if the detected variation constitutes a recognized variation. If the characteristics of the detected variation do not bear a sufficient similarity to the characteristics of the known or anticipated variations, the variation is not recognized as constituting a known or anticipated variation and method 400 proceeds to block 402 where a new baseline ambient averaged spatial temperature characteristic for the field of view of the sensors is determined.

Thus, a reduction in the power consumed by the electronic device may be achieved by virtue of the electronic device not reacting, such as activating or powering on, to an unrecognized variation. Conversely, if the characteristics of the detected variation are sufficiently similar to the characteristics of a known or anticipated variation, the detected variation is recognized as a known or anticipated variation that corresponds to a predetermined inferred intent of the detected object, and method 400 proceeds to block 410.

At block 410, an action corresponding to the recognized variation and the intent of the object, such as a user, inferred therefrom may be taken by the electronic device. In embodiments, the electronic device, such as electronic device 100, may take various actions responsive to the detection and recognition of a variation that corresponds to an inferred intent of the user, including, for example, displaying notifications to the detected presence, adjusting the rendering perspective on a display of the electronic device to render the displayed information as appearing to be aimed at the location or to track movement of the detected user presence, wake the electronic device, activate additional sensors within the sensor hub 200 or the electronic device 100 to enable the electronic device to accept input, such as, for example, via spoken command, or to recognize the detected user presence via facial or voice recognition and unlock the device or display notifications intended for or preselected by the detected and recognized user. Thus, by taking a predetermined action only in response to recognized variations the power consumed by the electronic device may be reduced.

Figure 5 illustrates an exemplary anticipated temperature variation characteristic that is indicative of a user approaching electronic device 100 including sensors 110 or 210A-C. The illustrated temperature variation characteristic 500 plots sensed average ambient temperature versus time. As shown in Fig. 5, the average ambient temperature is sensed over time by the sensors 110, 210A-C until a sensed temperature saturation point is reached. More particularly, portion 502 of the exemplary temperature characteristic 500 shows that the average ambient temperature sensed by the sensors increases from a temperature of approximately 28C at time t₀ to a temperature of approximately 35C at time t₈, and at portion 504 a saturation condition exists and the temperature remains relatively constant from time t₈ to time t₁₂. The portion 502 of characteristic 500 illustrated in Fig. 5 is indicative of a user proceeding from the outer detection zone 304 (Fig. 3) toward the inner detection zone 302. Saturation of the sensor occurs at portion 504 when the detected presence closely approaches and/or enters the inner detection zone 302, thereby occupying a substantial portion of the sensor's field of view and resulting in the sensed temperature reaching a plateau. The saturation condition will persist until the user moves away from the sensor or moves in such a manner as to occupy less of the field of view of the sensor.

Figure 6 illustrates an exemplary anticipated temperature variation characteristic 600 that is indicative of a user passing by the electronic device 100 and through the field of view of sensors 110, 201A-C. The illustrated exemplary temperature variation characteristic 600 plots sensed average ambient temperature versus time. As shown in Fig. 6, the average ambient temperature sensed by the sensors 110, 210A-C, ramps up from the average spatial ambient temperature baseline, briefly plateaus, and then ramps down to return to the average spatial ambient temperature baseline. More particularly, the ambient temperature sensed by the sensors increases over portion 602 from time t₀ to time t₃, plateaus at portion 604 from t₃ to time t₅, ramps down over portion 606 from t₅ to time t₈, and then returns to the baseline temperature characteristic at portion 608 from time t₈ to time t₁₂. The exemplary characteristic 600 illustrated in Fig. 6 is indicative of a user occupying an increasingly-large portion or area of the sensor field of view over portion 602, plateauing as the user occupies a maximum portion or area of the sensor field of view at portion 604, ramping down as the user occupies less and less of the field of view as the user proceeds out of the sensor field of view over portion 606, and returning to the baseline characteristic once the user has exited the field of view at portion 608. The characteristic illustrated in Fig. 6 is thus indicative of a user proceeding across the field of view of one sensor, or through the collective field of view of the several sensors.

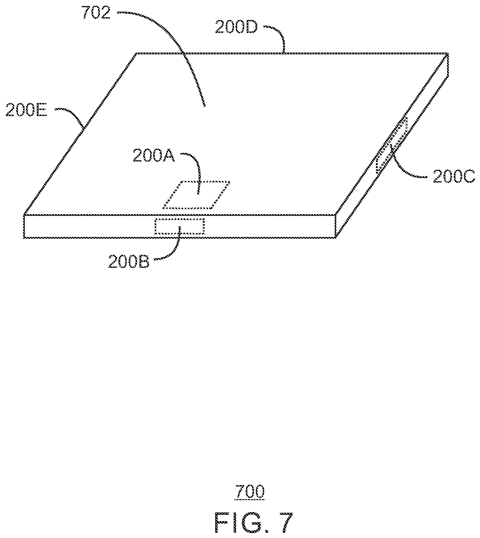

Figure 7 illustrates an electronic device 700 having one embodiment of a presence sensing method and apparatus of the present invention. Device 700 is configured to be used in a variety of positions, including lying flat on a table or other surface. In embodiments, electronic device 700 may be a tablet computer, tablet device, cellular phone, or similar device that may lay flat on a table or surface. Device 700 includes a first sensor hub 200A associated with the face or touch screen display 702 of device 700, and a respective sensor hub 200B-E associated with each side of device 700. Each of the sensor hubs 200A-200E may include one or more sensors 110, one or more sensors 210A-C with associated lenses 212A-C, and may further include various other sensors, such as an audio sensor or microphone 240, gyroscope 250, ambient light sensor 260 and camera sensor 270.

However, it should be noted that, in embodiments, the sensor hubs 200A-200E may be variously configured with different types of sensors or combinations of the foregoing sensors. For example, in embodiments, the sensor hub 200A associated with the display of the device 700 may include a full complement of sensors whereas the sensor hubs 200B-E associated with the sides of the device may include only the sensors 210A-C, their associated lenses 212A-C, and amplification 220 and decoding circuitry 230 to detect and characterize the presence of a user. Thus, device 700 when lying flat on a table or other surface is thus configured to sense a user presence and direction of movement of an object of interest by operation of the sensor hubs 200B-C associated with the sides of device 700. It should also be noted that sensors 110, 210A-C, may be enclosed in a housing substantially similar to housings 120 and 280 described above, and which are impervious to all infrared radiation outside the range of interest, such as a range from approximately 7 to approximately 15 micrometers in the case of human detection.

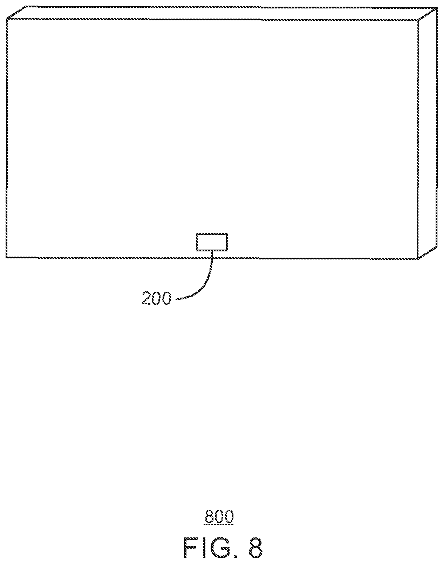

Figure 8 illustrates a flat panel display 800 having a presence sensing method and apparatus of the present invention. Display 800 may, in embodiments, be configured as a television, computer monitor, or other large-screen display panel. Display 800 includes a first sensor hub 200 associated with the display surface of display 800. Sensor hub 200 may include one or more sensors 110, one or more sensors 210A-C with associated lenses 212A-C, and may further include various other sensors, such as an audio sensor or microphone 240, gyroscope 250, ambient light sensor 260 and camera sensor 270. Similar to other embodiments, sensors 110, 210A-C of sensor hub 200 may be enclosed in a housing substantially similar to housings 120 and 280 described above, and which are impervious to all infrared radiation outside the range of interest.

It is to be understood that specifics in the aforementioned examples may be used anywhere in one or more embodiments. For instance, all optional features of exemplary devices described above may also be implemented with respect to any of the other exemplary devices and/or the method described herein. Furthermore, although flow diagrams and/or state diagrams may have been used herein to describe embodiments, the present techniques are not limited to those diagrams or to their corresponding descriptions. For example, the illustrated flow need not move through each box or state or in exactly the same order as depicted and described. The present techniques are not restricted to the particular details listed herein. Indeed, those skilled in the art having the benefit of this disclosure will appreciate that many other variations from the foregoing description and drawings may be made within the scope of the present techniques.

## Claims

1. An electronic device (100, 700), comprising:
at least one thermopile sensor (110, 210, 210A-C) for sensing a presence of an object within a field of view of the at least one thermopile sensor;
a processing unit;
a memory unit; and
computer readable instructions (106, 108) stored in the memory unit that, when executed by the processing unit (102), cause the device (100, 700) to sense with the at least one thermopile sensor (110, 210, 210A-C) a baseline ambient spatial average temperature within the field of view;
monitor the field of view for a variation (404) in the ambient spatial average temperature of the field of view relative to the baseline ambient spatial average temperature;
characterize any detected variation (406);
determine whether the detected variation (408) corresponds to one of a set of anticipated variations, each anticipated variation corresponding to an inferred intent of the object; and
cause the electronic device (100, 700) to take at least one predetermined action responsive to a recognized variation (410),
wherein characterizing a detected variation (406) comprises periodically
determining the ambient spatial average temperature within the field of view, and recording over time the variation in the measured ambient spatial average temperature relative to the baseline characteristic and wherein determining whether the detected variation corresponds to an anticipated variation comprises comparing characteristics (500, 600) of the recorded variation with characteristics of each of the set of anticipated variations,
wherein the characteristics (500, 600) of the anticipated variations are stored as a look up table.

2. The electronic device (100, 700) of claim 1, wherein the instructions (106, 108), when executed by the processing unit, cause the device to characterize the sensed presence in terms of at least one of location, proximity, and direction of movement, relative to the device.

3. The electronic device (100, 700) of any combination of claims 1-2, wherein the instructions (106, 108), when executed by the processing unit, characterize a sensed presence as approaching or in close proximity to the device, and wherein the one or more predetermined actions responsive to the sensed presence include waking the device, activating a display (702, 800) of the device, adjusting a rendering perspective of the display, activating one or more additional sensors (110, 210, 210A-C, 260, 270) associated with the device, and one of displaying and announcing predetermined content.

4. The electronic device (100, 700) of any combination of claims 1-3, wherein the instructions (106, 108), when executed by the processing unit, characterize a sensed presence as one of passing through the field of view or otherwise not approaching the device, and wherein the one or more predetermined actions responsive to the sensed presence include at least one of ignoring the sensed presence and continuing to characterize the sensed presence.

5. The electronic device (100, 700) of any combination of claims 1-4, further comprising a lens (212) associated with each of the at least one sensors (110, 210, 210A-C), wherein the lens comprises a Fresnel lens.

6. The electronic device (100, 700) of any combination of claims 1-5, further comprising an amplifier and processing device communicatively coupled to the processing unit, memory unit, a sensor (110, 210, 210A-C, 260, 270), and a decoding device communicatively coupled to the amplifier and processing device, the processing unit, the memory unit, and the sensor.

7. A method (400) for sensing, in an electronic device (100, 700), the presence, and inferring therefrom the intent, of an object, comprising:
sensing with a thermopile sensor (110, 210, 210A-C) a baseline ambient spatial average temperature for a sensed field of view;
monitoring the sensed field of view for a variation (404) in the ambient spatial average temperature of the field of view relative to the baseline ambient spatial average temperature;
characterizing any detected variation (406);
determining whether the detected variation (408) corresponds to one of a set of anticipated variations, each anticipated variation corresponding to an inferred intent of the object; and
causing the electronic device (100, 700) to take at least one predetermined action responsive to a recognized variation (410),
wherein characterizing a detected variation (406) comprises periodically
determining the ambient spatial average temperature within the field of view and recording over time the variation in the measured ambient spatial average temperature relative to the baseline characteristic and wherein determining whether the detected variation corresponds to an anticipated variation comprises comparing characteristics (500, 600) of the recorded variation with characteristics of each of the set of anticipated variations,
wherein the characteristics (500, 600) of the anticipated variations are stored as a look up table.

8. The method (400) of claim 7, wherein monitoring the sensed field of view for a variation (404) in the ambient spatial average temperature comprises periodically sensing the ambient spatial average temperature of the field of view.

9. The method (400) of any combination of claims 7-8, wherein causing the electronic device (100, 700) to take at least one predetermined action responsive to a recognized variation (410) includes waking the device, activating a display (702, 800) of the device, adjusting a rendering perspective of the display, activating one or more additional sensors (110, 210, 210A-C, 260, 270) associated with the device, and one of displaying and announcing predetermined content.

10. At least one non-transitory machine readable medium having instructions (106, 108) stored thereon that, in response to being executed on an electronic device (100, 700), cause the electronic device to perform the method (400) of any combination of claims 7-9.

## Patentansprüche

1. Elektronische Vorrichtung (100, 700), die Folgendes umfasst:
mindestens einen Thermosäulensensor (110, 210, 210A-C) zum Erfassen der Anwesenheit eines Gegenstands innerhalb eines Blickfelds des mindestens einen Thermosäulensensors;
eine Verarbeitungseinheit;
eine Speichereinheit; und
computerlesbare Anweisungen (106, 108), die in der Speichereinheit gespeichert sind, die dann, wenn sie durch die Verarbeitungseinheit (102) ausgeführt werden, bewirken, dass die Vorrichtung (100, 700)
mit dem mindestens einen Thermosäulensensor (110, 210, 210A-C) eine durchschnittliche Basisumgebungsraumtemperatur in dem Blickfeld erfasst;
das Blickfeld auf eine Änderung der durchschnittlichen Umgebungsraumtemperatur des Blickfelds in Bezug auf die durchschnittliche Basisumgebungsraumtemperatur überwacht (404);
jede detektierte Änderung charakterisiert (406);
bestimmt, ob die detektierte Änderung einer aus einer Gruppe erwarteter Änderungen entspricht (408), wobei jede erwartete Änderung einem abgeleiteten Zweck des Gegenstands entspricht; und
bewirkt, dass die elektronische Vorrichtung (100, 700) als Antwort auf eine erkannte Änderung mindestens eine vorgegebene Maßnahme ergreift (410),
wobei das Charakterisieren einer detektierten Änderung (406) das periodische Bestimmen der durchschnittlichen Umgebungsraumtemperatur in dem Blickfeld und das Aufzeichnen der Änderung der gemessenen, durchschnittlichen Umgebungsraumtemperatur in Bezug auf die Basiskennlinie im Zeitablauf umfasst und wobei das Bestimmen, ob die detektierte Änderung einer erwarteten Änderung entspricht, das Vergleichen der Eigenschaften (500, 600) der aufgezeichneten Änderung mit den Eigenschaften jeder aus der Gruppe der erwarteten Änderungen umfasst,
wobei die Eigenschaften (500, 600) der erwarteten Änderungen als eine Nachschlagetabelle gespeichert sind.

2. Elektronische Vorrichtung (100, 700) nach Anspruch 1, wobei die Anweisungen (106, 108) dann, wenn sie durch die Verarbeitungseinheit ausgeführt werden, bewirken, dass die Vorrichtung die erfasste Anwesenheit bezüglich des Ortes und/oder der räumlichen Nähe und/oder der Bewegungsrichtung in Bezug auf die Vorrichtung charakterisiert.

3. Elektronische Vorrichtung (100, 700) nach einer beliebigen Kombination der Ansprüche 1-2, wobei die Anweisungen (106, 108) dann, wenn sie durch die Verarbeitungseinheit ausgeführt werden, eine erfasste Anwesenheit als sich nähernd oder in enger räumlicher Nähe zur Vorrichtung charakterisieren und wobei die eine oder die mehreren vorgegebenen Maßnahmen als Antwort auf die erfasste Anwesenheit das Aufwecken der Vorrichtung, das Aktivieren einer Anzeige (702, 800) der Vorrichtung, das Einstellen einer Wiedergabeperspektive der Anzeige, das Aktivieren eines oder mehrerer zusätzlicher Sensoren (110, 210, 210A-C, 260, 270), die der Vorrichtung zugeordnet sind, und entweder das Anzeigen oder das Ansagen eines vorgegebenen Inhalts enthalten.

4. Elektronische Vorrichtung (100, 700) nach einer beliebigen Kombination der Ansprüche 1-3, wobei die Anweisungen (106, 108) dann, wenn sie durch die Verarbeitungseinheit ausgeführt werden, eine erfasste Anwesenheit entweder als sich durch das Blickfeld bewegend oder sich auf andere Weise nicht der Vorrichtung nähernd charakterisieren und wobei die eine oder die mehreren vorgegebenen Maßnahmen als Antwort auf die erfasste Anwesenheit das Ignorieren der erfassten Anwesenheit und/oder das Fortsetzen, die erfasste Anwesenheit zu charakterisieren, enthalten.

5. Elektronische Vorrichtung (100, 700) nach einer beliebigen Kombination der Ansprüche 1-4, die ferner eine Linse (212), die jedem des mindestens einen Sensors (110, 210, 210A-C) zugeordnet ist, umfasst, wobei die Linse eine Fresnel-Linse umfasst.

6. Elektronische Vorrichtung (100, 700) nach einer beliebigen Kombination der Ansprüche 1-5, die ferner eine Verstärker- und Verarbeitungsvorrichtung, die mit der Verarbeitungseinheit kommunikativ gekoppelt ist, eine Speichereinheit, einen Sensor (110, 210, 210A-C, 260, 270) und eine Decodiervorrichtung, die mit der Verstärker- und Verarbeitungsvorrichtung, der Verarbeitungseinheit, der Speichereinheit und dem Sensor kommunikativ gekoppelt ist, umfasst.

7. Verfahren (400) zum Erfassen der Anwesenheit eines Gegenstands und zum Ableiten daraus seines Zwecks in einer elektronischen Vorrichtung (100, 700), das Folgendes umfasst:
Erfassen einer durchschnittlichen Basisumgebungsraumtemperatur für ein erfasstes Blickfeld mit einem Thermosäulensensor (110, 210, 210A-C) ;
Überwachen des erfassten Blickfelds auf eine Änderung der durchschnittlichen Umgebungsraumtemperatur des Blickfelds in Bezug auf die durchschnittliche Basisumgebungsraumtemperatur (404);
Charakterisieren jeder detektierten Änderung (406) ;
Bestimmen, ob die detektierte Änderung einer aus einer Gruppe erwarteter Änderungen entspricht (408), wobei jede erwartete Änderung einem abgeleiteten Zweck des Gegenstands entspricht; und
Bewirken, dass die elektronische Vorrichtung (100, 700) als Antwort auf eine erkannte Änderung mindestens eine vorgegebene Maßnahme ergreift (410),
wobei das Charakterisieren einer detektierten Änderung (406) das periodische Bestimmen der durchschnittlichen Umgebungsraumtemperatur in dem Blickfeld und das Aufzeichnen der Änderung der gemessenen, durchschnittlichen Umgebungsraumtemperatur in Bezug auf die Basiskennlinie im Zeitablauf umfasst und wobei das Bestimmen, ob die detektierte Änderung einer erwarteten Änderung entspricht, das Vergleichen der Eigenschaften (500, 600) der aufgezeichneten Änderung mit den Eigenschaften jeder aus der Gruppe der erwarteten Änderungen umfasst,
wobei die Eigenschaften (500, 600) der erwarteten Änderungen als eine Nachschlagetabelle gespeichert sind.

8. Verfahren (400) nach Anspruch 7, wobei das Überwachen des erfassten Blickfelds auf eine Änderung der durchschnittlichen Umgebungsraumtemperatur (404) das periodische Erfassen der durchschnittlichen Umgebungsraumtemperatur des Blickfelds umfasst.

9. Verfahren (400) nach einer beliebigen Kombination der Ansprüche 7-8, wobei das Bewirken, dass die elektronische Vorrichtung (100, 700) als Antwort auf eine erkannte Änderung mindestens eine vorgegebene Maßnahme ergreift (410), das Aufwecken der Vorrichtung, das Aktivieren einer Anzeige (702, 800) der Vorrichtung, das Einstellen einer Wiedergabeperspektive der Anzeige, das Aktivieren eines oder mehrerer zusätzlicher Sensoren (110, 210, 210A-C, 260, 270), die der Vorrichtung zugeordnet sind, und entweder das Anzeigen oder das Ansagen eines vorgegebenen Inhalts enthält.

10. Mindestens ein nichtflüchtiges, maschinenlesbares Medium, auf dem Anweisungen (106, 108) gespeichert sind, die als Antwort darauf, auf einer elektronischen Vorrichtung (100, 700) ausgeführt zu werden, bewirken, dass die elektronische Vorrichtung das Verfahren (400) nach einer beliebigen Kombination der Ansprüche 7-9 durchführt.

## Revendications

1. Dispositif électronique (100, 700), comportant :
au moins un capteur (110, 210, 210A-C) à thermopile servant à détecter la présence d'un objet à l'intérieur d'un champ de vision du ou des capteurs à thermopile ;
une unité de traitement ;
une unité de mémoire ; et
des instructions (106, 108) lisibles par ordinateur stockées dans l'unité de mémoire qui, lorsqu'elles sont exécutées par l'unité de traitement (102), amènent le dispositif (100, 700) à
détecter, avec le ou les capteurs (110, 210, 210A-C) à thermopile, une température ambiante moyenne spatiale de référence à l'intérieur du champ de vision ;
surveiller le champ de vision pour déceler une variation (404) dans la température ambiante moyenne spatiale du champ de vision par rapport à la température ambiante moyenne spatiale de référence ;
caractériser une éventuelle variation détectée (406) ;
déterminer si la variation détectée (408) correspond à une variation parmi un ensemble de variations attendues, chaque variation attendue correspondant à une intention déduite de l'objet ; et amènent le dispositif électronique (100, 700) à effectuer au moins une action prédéterminée en réponse à une variation reconnue (410), la caractérisation d'une variation détectée (406) comportant la détermination périodique de la température ambiante moyenne spatiale à l'intérieur du champ de vision, et l'enregistrement au fil du temps de la variation dans la température ambiante moyenne spatiale mesurée par rapport à la caractéristique de référence et la détermination du fait que la variation détectée corresponde ou non à une variation attendue comportant la comparaison de caractéristiques (500, 600) de la variation enregistrée avec des caractéristiques de chaque variation de l'ensemble de variations attendues, les caractéristiques (500, 600) des variations attendues étant stockées sous forme d'une table de consultation.

2. Dispositif électronique (100, 700) selon la revendication 1, les instructions (106, 108), lorsqu'elles sont exécutées par l'unité de traitement, amenant le dispositif à caractériser la présence détectée en termes d'au moins un aspect parmi la localisation, la proximité et la direction de mouvement, par rapport au dispositif.

3. Dispositif électronique (100, 700) selon une combinaison quelconque des revendications 1 à 2, les instructions (106, 108), lorsqu'elles sont exécutées par l'unité de traitement, caractérisant une présence détectée comme s'approchant ou à proximité immédiate du dispositif, et l'action ou les actions prédéterminées en réponse à la présence détectée comprenant le réveil du dispositif, l'activation d'un affichage (702, 800) du dispositif, le réglage d'une perspective de rendu de l'affichage, l'activation d'un ou de plusieurs capteurs (110, 210, 210A-C, 260, 270) supplémentaires associés au dispositif, et une action parmi l'affichage et l'annonce d'un contenu prédéterminé.

4. Dispositif électronique (100, 700) selon une combinaison quelconque des revendications 1 à 3, les instructions (106, 108), lorsqu'elles sont exécutées par l'unité de traitement, caractérisant une présence détectée soit comme traversant le champ de vision soit, si ce n'est pas le cas, comme ne s'approchant pas du dispositif, et l'action ou les actions prédéterminées en réponse à la présence détectée comprenant au moins une action parmi celles d'ignorer la présence détectée et de continuer à caractériser la présence détectée.

5. Dispositif électronique (100, 700) selon une combinaison quelconque des revendications 1 à 4, comportant en outre une lentille (212) associée au capteur ou à chacun des capteurs (110, 210, 210A-C), la lentille comportant une lentille de Fresnel.

6. Dispositif électronique (100, 700) selon une combinaison quelconque des revendications 1 à 5, comportant en outre un amplificateur et un dispositif de traitement couplé communicativement à l'unité de traitement, à l'unité de mémoire, à un capteur (110, 210, 210A-C, 260, 270), et un dispositif de décodage couplé communicativement à l'amplificateur et au dispositif de traitement, à l'unité de traitement, à l'unité de mémoire et au capteur.

7. Procédé (400) pour détecter, dans un dispositif électronique (100, 700), la présence, et en déduire l'intention, d'un objet, comportant les étapes consistant à :
détecter avec un capteur (110, 210, 210A-C) à thermopile une température ambiante moyenne spatiale de référence pour un champ de vision détecté ;
surveiller le champ de vision détecté pour déceler une variation (404) dans la température ambiante moyenne spatiale du champ de vision par rapport à la température ambiante moyenne spatiale de référence ;
caractériser une éventuelle variation détectée (406) ;
déterminer si la variation détectée (408) correspond à une variation parmi un ensemble de variations attendues, chaque variation attendue correspondant à une intention déduite de l'objet ; et
amener le dispositif électronique (100, 700) à effectuer au moins un action prédéterminée en réponse à une variation reconnue (410), la caractérisation d'une variation détectée (406) comportant la détermination périodique de la température ambiante moyenne spatiale à l'intérieur du champ de vision et l'enregistrement au fil du temps de la variation dans la température ambiante moyenne spatiale mesurée par rapport à la caractéristique de référence et la détermination du fait que la variation détectée corresponde ou non à une variation attendue comportant la comparaison de caractéristiques (500, 600) de la variation enregistrée avec des caractéristiques de chaque variation de l'ensemble de variations attendues, les caractéristiques (500, 600) des variations attendues étant stockées sous forme d'une table de consultation.

8. Procédé (400) selon la revendication 7, la surveillance du champ de vision détecté pour déceler une variation (404) dans la température ambiante moyenne spatiale comportant la détection périodique de la température ambiante moyenne spatiale du champ de vision.

9. Procédé (400) selon une combinaison quelconque des revendications 7 à 8, le fait d'amener le dispositif électronique (100, 700) à effectuer au moins une action prédéterminée en réponse à une variation reconnue (410) comprenant le réveil du dispositif, l'activation d'un affichage (702, 800) du dispositif, le réglage d'une perspective de rendu de l'affichage, l'activation d'un ou plusieurs capteurs supplémentaires (110, 210, 210A-C, 260, 270) associés au dispositif, et une action parmi l'affichage et l'annonce d'un contenu prédéterminé.

10. Au moins un support non transitoire lisible par machine sur lequel sont stockées des instructions (106, 108) qui, en réponse à leur exécution sur un dispositif électronique (100, 700), amènent le dispositif électronique à réaliser le procédé (400) selon une combinaison quelconque des revendications 7 à 9.
